# EUROPÄISCHE PATENTSCHRIFT

(11) **EP 2 925 576 B1**
(45) Veröffentlichungstag und Bekanntmachung des Hinweises auf die Patenterteilung: **29.03.2017**
(21) Anmeldenummer: 13792018.7
(22) Anmeldetag: 18.11.2013
(51) Int. Cl.: B60T 8/36, B60T 8/48

(54) **BREMSSYSTEM FÜR EIN LANDFAHRZEUG, HYDRAULIKAGGREGAT UND VERFAHREN ZUM STEUERN EINES BREMSSYSTEMS**
BRAKE SYSTEM FOR A LAND VEHICLE, HYDRAULIC UNIT AND METHOD FOR CONTROLLING A BRAKE SYSTEM
SYSTÈME DE FREINAGE POUR VÉHICULE TERRESTRE, UNITÉ HYDRAULIQUE ET PROCÉDÉ DE COMMANDE D'UN SYSTÈME DE FREINAGE

(30) Priorität: 29.11.2012 DE 102012023319
(43) Veröffentlichungstag der Anmeldung: 07.10.2015
(73) Patentinhaber: Lucas Automotive GmbH, 56070 Koblenz (DE)
(72) Erfinder: MARX, Andreas, 56244 Hartenfels (DE)
(74) Vertreter: Schmidt, Steffen J.
(86) Internationale Anmeldenummer: PCT/EP2013/074053
(87) Internationale Veröffentlichungsnummer: WO 2014/082887

(56) Entgegenhaltungen:
- WO-A1-2009/089944
- WO-A1-2011/134987
- DE-A1- 4 423 086
- DE-A1- 19 960 336
- US-A1- 2010 187 901

## Beschreibung

### Technisches Gebiet

Hier wird ein Fahrzeugbremssystem für ein Landfahrzeug beschrieben, das zum Beispiel regeneratives Bremsen ermöglicht, also einen Bremsvorgang bei dem eine elektrische Maschine kinetische Energie des Landfahrzeugs in elektrische Energie umwandelt.

### Hintergrund

Fahrzeuge weisen in der Regel eine Fahrzeugbremsanlage auf, in welcher zum Bremsen ein Hydraulikfluid an Radbremsen eines Fahrzeugs geleitet wird. Zunehmend haben Fahrzeuge aber auch eine elektrische Maschine die dazu dient, das Fahrzeug zumindest unterstützend zu einem Verbrennungsmotor anzutreiben. Die elektrische Maschine bietet gegenüber einem Verbrennungsmotor den Vorteil, dass sie bei der sogenannten regenerativen Bremsung generatorisch betrieben werden kann, um eine Fahrzeugbatterie aufzuladen. Die in der aufgeladenen Batterie gespeicherte chemische Energie findet dann in einem motorischen Betrieb der elektrischen Maschine wieder Verwendung zum Antrieb des Kraftfahrzeugs.

Während im Normalbremsbetrieb Bewegungsenergie des Fahrzeugs aufgrund des reibschlüssigen Zusammenwirkens von Bremsbacken und Bremsscheiben an den Radbremsen in Wärmeenergie umgewandelt wird, erfolgt im regenerativen Bremsbetrieb somit ein Aufladen der Fahrzeugbatterie. Da im regenerativen Bremsbetrieb das Abbremsen des Kraftfahrzeugs mittels der elektrischen Maschine erfolgt, können die Radbremsen unbetätigt bleiben. In der Regel ist dies sogar erwünscht, da jegliche an den Radbremsen in Wärmeenergie umgewandelte Bewegungsenergie nicht mehr zum Aufladen der Fahrzeugbatterie zur Verfügung steht.

So beschreibt zum Beispiel das Dokument DE 10 2009 039 207 A1 eine regenerative Fahrzeugbremse und ein Betriebsverfahren für eine regenerative Fahrzeugbremse, welche eine Regenerations-Einrichtung aufweist, die einen asymmetrischen regenerativen Bremsbetrieb für einen ersten und einen zweiten hydraulischen Bremskreis ermöglicht. Ein Fahrzeug mit einer solchen regenerativen Fahrzeugbremse umfasst einen Generator, wobei in dem regenerativen Bremsbetrieb ein Bremsdruckaufbau an Radbremsen des ersten Bremskreises zumindest reduziert und ein Bremsdruckaufbau an Radbremsen des zweiten Bremskreises im Wesentlichen unreduziert erfolgt. Dazu weist die Regenerations-Einrichtung zumindest Verzögerungseinrichtungen auf.

Die in Dokument DE 10 2009 039 207 A1 beschriebene Fahrzeugbremse umfasst allerdings mehr Komponenten als herkömmliche Bremssysteme. Diese zusätzlichen Komponenten benötigen zusätzlichen Bauraum und erhöhen das Systemgewicht. Zudem bedingen Pedalrückwirkungs-Simulationseinrichtungen, die bei regenerativen Fahrzeugbremsen zum Einsatz kommen, häufig eine aufwendigere Regelung des Bremssystems oder weisen teilweise eine nicht zufriedenstellende Regelgüte auf.

WO 2009/089944 A1 offenbart ein Bremssystem für ein Fahrzeug mit einem Hauptbremszylinder, einem an den Hauptbremszylinder angeschlossenen Bremsmediumreservoir, einem ersten Bremskreis und einem zweiten Bremskreis. Der erste Bremskreis umfasst Radeinlassventile Radauslassventile und ein Druckstellventil. Das Druckstellventil ist zwischen einer Pumpe und dem Bremsmediumreservoir derart angeordnet, dass bei geschlossenem Druckstellventil Bremsflüssigkeit mittels der Pumpe aus dem Reservoir zum Druckaufbau in die Radbremszylinder der Bremszangen gefördert werden kann. Wird das Druckstellventil geöffnet, kann ein Teil der Bremsflüssigkeit aus dem ersten Bremskreis schnell in das Bremsmediumreservoir zurückströmen.

Der hier beschriebene Druckabbau im ersten Bremskreis, der durch Öffnen des Druckstellventils erreicht wird, wird nicht durch eine Fördertätigkeit der Pumpe bewirkt. Das Öffnen des Druckstellventils zum Druckabbau dient lediglich dazu, dass ein Teil der Bremsflüssigkeit aus dem ersten Bremskreis schnell über das Druckstellventil in das Bremsmediumreservoir zurückströmen kann. Ein Fördern einer Bremsflüssigkeit von einer Radbremse zu einem Zwischenspeicher mittels der Pumpe ist nicht möglich. Würde die Pumpe bei geöffnetem Druckstellventil, was für einen Druckabbau erforderlich ist, Bremsflüssigkeit fördern, würde gleichzeitig Bremsflüssigkeit über dieselbe Leitung angesaugt und ausgepumpt werden.

Da die Bremsflüssigkeit in dem ersten Bremskreis lediglich durch Zurückströmen in das Bremsmediumreservoir Bremsdruck in den Radbremsen abbaut, liegt der Druck in dem Reservoir unter einem in einer Speicherkammer herrschenden Druck. Eine solche Speicherkammer ist in dem zweiten Bremskreis vorgesehen. Ein verhältnismäßig geringer Druck in dem Bremsmediumreservoir ist in dem System zwingend notwendig, da der Druckabbau bzw. das Einströmen von Bremsflüssigkeit in das Reservoir nicht durch ein Fördern der Pumpe unterstützt wird.

Mit der Anordnung des Druckstellventils, der Pumpe und des Bremsmediumreservoirs ist es in dem ersten Bremskreis lediglich möglich, einen bestimmten Bremsdruck schnell abzubauen. Ein langsamer Druckabbau für den Regelungsfall, zum Beispiel bei ABS, ist mit Hilfe dieser Anordnung nicht möglich.

WO 2011/134987 A1 beschreibt ein Bremssystem mit einer Radbremse, einer Pumpe und einem Druckspeicher. Zudem umfasst das Bremssystem ein Ventil zwischen der Ausgangsseite der Pumpe und der Radbremse, ein Ventil zwischen der Radbremse und der Pumpe sowie ein Auslassventil zwischen der Ausgangsseite der Pumpe und dem Druckspeicher. Die beschriebene Pumpe dient lediglich einer weiteren Erhöhung des Bremsdrucks in einer Reibungsbremse zur Unterstützung einer Bremsbetätigung eines Bremsdruckerzeugungsmittels.

Des Weiteren dient das Auslassventil lediglich der Verbindung des Bremsdruckerzeugungsmittels und des Druckspeichers. Durch Öffnen des Auslassventils kann D1 ein Druckmittelvolumen in den Druckspeicher abgeleitet werden, ohne dass die Reibungsbremse mit Druckmittel beaufschlagt wird. Ein Druckabbau in der Radbremse durch Öffnen des Auslassventils ist nicht möglich.

DE 44 23 086 A1 beschreibt eine schlupfgeregelte hydraulische Bremsanlage mit einem Reservespeicher, der über eine Pumpenspeiseleitung an eine Saugleitung einer Pumpe angeschlossen werden kann, wenn ein Sensor signalisiert, dass ein Hauptzylindervolumen nahezu erschöpft ist. Diese Bremsanlage hat weder eine Pumpe mit variabler Förderleistung noch wird Bremsdruck in einer Radbremse durch Fördern einer Bremsflüssigkeit von der Radbremse in einen Zwischenspeicher mittels der Pumpe abgebaut. Zudem wird ein Reservespeicher in der hydraulischen Bremsanlage nicht durch Fördern von Bremsflüssigkeit aus der Radbremse in den Reservespeicher gefüllt. Insbesondere führt die Befüllung des Reservespeichers nicht zu einem Druckabbau in der Radbremse. Die Pumpe fördert über die Bremsleitung und die Saugleitung lediglich Bremsflüssigkeit aus dem Vorratsbehälter des Hauptzylinders in den Reservespeicher.

Ferner wäre es wünschenswert, dass das Fahrzeugbremssystem für konventionell gebremste Landfahrzeuge und regenerativ gebremste Landfahrzeuge geeignet ist, oder zumindest relativ einfach an die jeweiligen Anforderungen angepasst werden kann.

### Zugrunde liegende Aufgabe

Es ist daher Aufgabe, ein einfach aufgebautes und kostengünstig herstellbares Fahrzeugbremssystem bereitzustellen. Zudem soll das Bremssystem eine hohe Regelgüte aufweisen, um den Fahrer ein komfortables Bremsverhalten und Bremsgefühl zu vermitteln.

### Vorgeschlagene Lösung

Zur Lösung der Aufgabe wird ein Bremssystem für ein Landfahrzeug vorgeschlagen. Das Bremssystem ermöglicht einen regenerativen Bremsvorgang und weist die Merkmale des Patentanspruchs 1 auf.

Durch die mit der dritten Ventilanordnung absperrbare hydraulische Verbindung zwischen der Ausgangsseite der Pumpe und dem Zwischenspeicher, die auch als Zwischenspeicher-Zuführleitung bezeichnet werden kann, kann die Pumpe das Hydraulikfluid von den Radbremsen direkt in den Zwischenspeicher fördern. Durch diese Volumenverschiebung kann Bremsdruck in den Radbremsen abgebaut werden. Wenn sich die dritte Ventilanordnung in Sperrstellung befindet, kann das Hydraulikfluid aus dem Zwischenspeicher in die Radbremsen gefördert werden. Durch die Volumenverschiebung vom Zwischenspeicher zu den Radbremsen kann der Bremsdruck in den Radbremsen erhöht werden. Die Schaltstellungen der Ventilanordnungen für Druckaufbau und Druckabbau können sich dabei lediglich durch die Schaltstellung der dritten Ventilanordnung unterscheiden. So kann bei geöffneter dritter Ventilanordnung Bremsdruck in den Radbremsen abgebaut werden und bei geschlossener dritter Ventilanordnung Bremsdruck in den Radbremsen aufgebaut werden.

Der Druckaufbau und der Druckabbau werden insbesondere durch die Volumenverschiebung zwischen Radbremsen und Zwischenspeicher bestimmt, wobei die Geschwindigkeit der Volumenverschiebung wiederum durch die Förderleistung der Pumpe bestimmt wird. Somit kann durch die Regelung der Förderleistung der Pumpe der Druckabbau und der Druckaufbau präzise geregelt werden, so dass sich ein komfortables Bremsgefühl beim Fahrer einstellt.

Zudem wird zur Lösung der Aufgabe ein die Merkmale des Patentanspruchs 8 aufweisendes Hydraulikaggregat vorgeschlagen, in dem die Pumpe und die ersten, zweiten und dritten Ventilanordnungen des Bremssystems aufgenommen sind.

Ferner wird zur Lösung der Aufgabe ein die Schritte des Patentanspruchs 9 aufweisendes Verfahren zum Steuern eines Bremssystems vorgeschlagen. Dieses Verfahren kann zum Beispiel bei einem regenerativen Bremsvorgang angewandt werden. Vorzugsweise während in einer elektrischen Maschine des Landfahrzeugs ein generatorisches Bremsmoment aufbaut wird, um kinetische Energie des Landfahrzeugs in elektrische Energie umzuwandeln.

Für eine Ausgestaltung des Bremssystems, das regeneratives Bremsen erlaubt, dient zum Beispiel eine Steuereinheit, die dazu eingerichtet ist, während eines regenerativen Bremsvorgangs den Ventilanordnungen Schaltstellungen derart vorzugeben und die Pumpe derart anzusteuern, dass die Pumpe Hydraulikfluid von der zumindest einen Radbremse zu dem Zwischenspeicher fördert, während in einer elektrischen Maschine des Landfahrzeugs ein generatorisches Bremsmoment aufgebaut wird, um kinetische Energie des Landfahrzeugs in elektrische Energie umzuwandeln.

### Ausgestaltung und Eigenschaften

Die Steuereinheit kann dazu eingerichtet sein, die Förderleistung der Pumpe und die Schaltstellungen der Ventilanordnungen derart vorzugeben, dass zu jedem Zeitpunkt die Summe aus generatorischen Bremsmoment und dem Bremsmoment der zumindest einen Radbremse gleich bleibt oder innerhalb einer vorzugebenden Toleranzgrenze bleibt. So kann die Steuereinheit die Drehzahl der Pumpe durch ein Pulsweitenmodulations-(PWM) Signal vorgeben. Zudem kann die Steuereinheit einen hintereinandergeschalteten Drehzahlsteller und Drehzahlregler zur Steuerung der Drehzahl aufweisen.

Die Steuereinheit kann ferner dazu eingerichtet sein, zum Ausgleichen von Schwankungen des generatorischen Bremsmoments, die Förderleistung der Pumpe zu verändern. Eine Schwankung des generatorischen Bremsmoments kann zum Beispiel einen Rückgang und einen folgenden Anstieg des generatorischen Bremsmoments umfassen. Zum Ausgleich eines Rückgangs des generatorischen Bremsmoments kann die Steuereinheit die Förderleistung der Pumpe erhöhen. Zudem kann die Steuereinheit die dritte Ventilanordnung schließen. Zum Ausgleich des Anstiegs des generatorischen Bremsmoments kann die Steuereinheit weiterhin eine erhöhte Drehzahl vorgeben, so dass die Drehzahl beim Rückgang und beim Anstieg des generatorischen Bremsmoments gleich oder ungefähr gleich ist. Zudem kann die Steuereinheit die dritte Ventilanordnung wieder öffnen. Während des Ausgleichs der Schwankung des generatorischen Bremsmoments können die ersten und zweiten Ventilanordnungen durchgehend geöffnet sein.

Ein erstes Sperrventil kann vorgesehen sein, um eine hydraulische Verbindung zwischen dem Zwischenspeicher und der zumindest einen zweiten Ventilanordnung zumindest in Richtung von der zumindest einen zweiten Ventilanordnung zum Zwischenspeicher zu sperren. Dadurch kann das von den Radbremsen zurückströmende Hydraulikfluid nicht direkt in den Zwischenspeicher strömen. Das erste Sperrventil kann zudem vorgesehen sein, um die hydraulische Verbindung zwischen dem Zwischenspeicher und der Eingangsseite der Pumpe, die auch als Zwischenspeicher-Rückführleitung bezeichnet werden kann, zumindest in Richtung von der Eingangsseite der Pumpe zum Zwischenspeicher zu sperren. Das erste Sperrventil kann zum Beispiel ein Rückschlagventil sein.

Es kann zumindest eine vierte Ventilanordnung zum Sperren einer hydraulischen Verbindung zwischen einem Hauptzylinder und der zumindest einen Radbremse vorgesehen sein. Die Steuereinheit kann die Schaltstellung der zumindest einen vierten Ventilanordnung derart vorgeben, dass eine Betätigung eines Bremspedals des Landfahrzeugs eine Volumenverschiebung von dem Hauptzylinder zu der zumindest einen Radbremse bewirkt, und dass während des Aufbaus des generatorischen Bremsmoments die zumindest eine vierte Ventilanordnung die hydraulische Verbindung zwischen dem Hauptzylinder und der zumindest einen Radbremse sperrt.

Parallel zur einen vierten Ventilanordnung kann ein zweites Sperrventil vorgesehen sein. Das zweite Sperrventil kann dazu eingerichtet sein, bei geschlossener vierter Ventilanordnung, eine Volumenverschiebung zwischen dem Hauptzylinder und den Radbremsen zu ermöglichen, sofern der Druck in dem Hauptzylinder die Vorspannung des zweiten Sperrventils übersteigt. Das zweite Sperrventil kann ein Rückschlagventil sein.

Die Steuereinheit kann die Schaltstellung der Ventilanordnungen derart vorgeben, dass das Fördern der Pumpe in einer Schaltstellung der Ventilanordnungen eine Reduzierung des Bremsdrucks in der zumindest einen Radbremse bewirkt und in einer anderen Schaltstellung der Ventilanordnungen eine Zunahme des Bremsdrucks in der zumindest einen Radbremse bewirkt. Die zwei Schaltstellungen können sich dabei lediglich durch die Schaltstellung der dritten Ventilanordnung unterscheiden. Die Schaltstellungen können die zweite und dritte Schaltstellung der Ventilanordnungen sein.

Bei einem Verfahren zum Steuern eines Bremssystems während eines regenerativen Bremsvorgangs kann sich das erste Sperrventil beim Reduzieren des Bremsdrucks in der zumindest einen Radbremse öffnen, wenn der Bremsdruck in der zumindest einen Radbremse einen vorbestimmten Druck unterschreitet.

Ferner kann sich das zweite Sperrventil öffnen, wenn der Bremsdruck im Hauptzylinder einen vorbestimmten Druck übersteigt. Daraufhin oder gleichzeitig kann die Steuereinheit die Ventilanordnungen derart ansteuern, dass sich die erste Ventilanordnung in Durchlassstellung und die zweite und dritte Ventilanordnung in Sperrstellung befinden. Außerdem kann die Steuereinheit die Förderleistung der Pumpe auf null reduzieren.

Schließlich kann, wenn die Geschwindigkeit des Landfahrzeugs einen einstellbaren Schwellenwert unterscheitet, das Bremssystem derart gesteuert werden, dass sich die dritte Ventilanordnung in Sperrstellung befindet und die Pumpe Hydraulikfluid fördert. Das Fördern der Pumpe kann dabei eine Volumenverschiebung von dem Zwischenspeicher zu den Radbremsen bewirken. Gleichzeitig kann das generatorische Bremsmoment wieder abgebaut werden. Sobald das generatorische Bremsmoment auf null abgebaut wurde und / oder der Bremsdruck in den Radbremsen wieder den vom Fahrer vorgegebenen Wert erreicht hat, kann die vierte Ventilanordnung wieder geöffnet werden.

### Kurze Beschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Die Abmessungen und Proportionen der in den Fig. gezeigten Komponenten sind hierbei nicht unbedingt maßstäblich; sie können bei zu implementierenden Ausführungsformen vom Veranschaulichten abweichen.
- Fig. 1: zeigt eine schematische Darstellung eines Fahrzeugbremssystems;
- Fig. 2: zeigt eine schematische Darstellung eines Fahrzeugbremssystems in einem ersten Zustand;
- Fig. 3: zeigt eine schematische Darstellung eines Fahrzeugbremssystems in einem zweiten Zustand;
- Fig. 4: zeigt eine schematische Darstellung eines Fahrzeugbremssystems in einem dritten Zustand;
- Fig. 5: zeigt Verläufe des Drucks des Hydraulikfluids, eines Bremsmoments, einer Füllung des Zwischenspeichers und einer Pumpendrehzahl über die Zeit; und
- Fig. 6: zeigt eine schematische Darstellung eines Hydraulikaggregats.

### Ausführliche Beschreibung der Ausführungsvarianten

Im Folgenden werden Ausführungsbeispiele eines Fahrzeugbremssystems 10 beschrieben, das regeneratives Bremsen ermöglicht. Übereinstimmende Elemente sind dabei in den Figuren mit denselben Bezugszeichen bezeichnet.

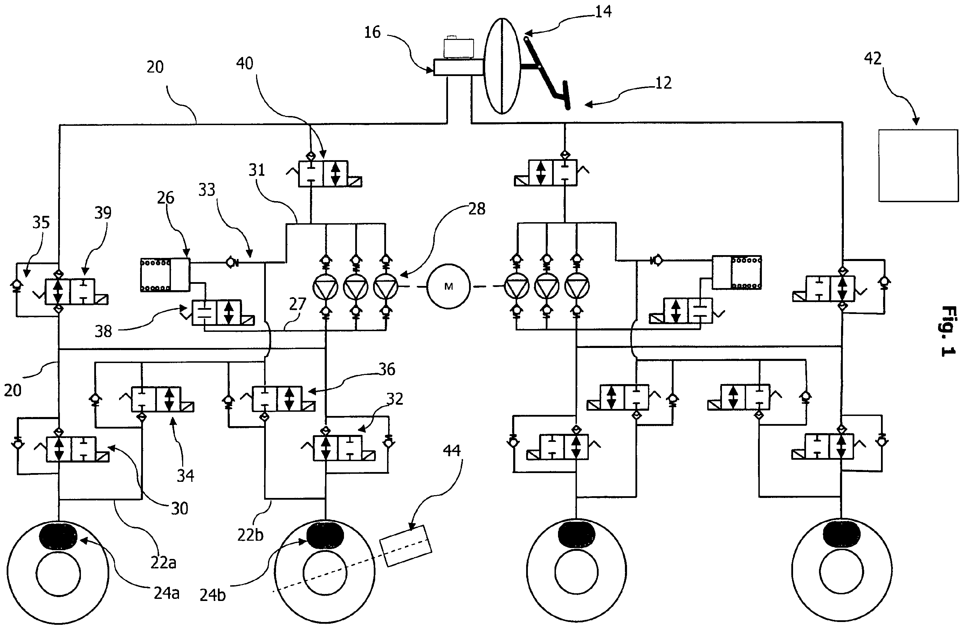

Die Figuren 1 bis 4 zeigen ein Fahrzeugbremssystem 10 eines Landfahrzeugs, das zum Beispiel regeneratives Bremsen ermöglicht. Das Fahrzeugbremssystem 10 weist zwei Bremskreise auf, wobei im Folgenden das Fahrzeugbremssystem in Bezug auf einen Bremskreis erläutert wird. Das für die Komponenten dieses Bremskreises Gesagte gilt in entsprechender Weise für den anderen Bremskreis.

Das in den Figuren 1 bis 4 gezeigte Fahrzeugbremssystem 10 weist ein Bremspedal 12 auf, welches über einen Bremskraftverstärker 14 mit einem Hauptzylinder 16 verbunden ist. Der Hauptzylinder 16 ist mit einem Bremsflüssigkeitsbehälter 18 verbunden, in welchem das Hydraulikfluid vorrätig gehalten wird. Über die Zuführleitung 20 und über erste Ventilanordnungen 30, 32 sowie vierte Ventilanordnung 39 ist der erste Bremskreis mit den Radbremsen 24a und 24b verbunden. Von den Radbremsen 24a und 24b führen Rückführleitungen 22a und 22b über zweite Ventilanordnungen 34 und 36 zu einer Eingangsseite einer Pumpe 28. An der Eingangsseite der Pumpe 28 ist eine fünfte Ventilanordnung 40 vorgesehen, wobei die Eingangsseite der Pumpe 28 durch die fünfte Ventilanordnung 40 mit dem Bremsflüssigkeitsbehälter 18 verbindbar ist. Durch Öffnen der fünften Ventilanordnung 40 kann die Pumpe 28 Hydraulikfluid aus dem Flüssigkeitsbehälter 18 ansaugen. Die Ausgangsseite der Pumpe 28 ist mit der Zuführleitung 20 und somit mit den ersten Ventilanordnungen 30 und 32 verbunden. Die Pumpe kann eine Radialkolbenpumpe sein, deren Förderleistung variabel ist.

Das dargestellte Fahrzeugbremssystem 10 weist ferner einen Zwischenspeicher 26 auf. Der Zwischenspeicher 26 ist zur vorübergehenden Aufnahme von Hydraulikfluid vorgesehen. Der dargestellte Zwischenspeicher 26 weist einen ersten und einen zweiten Anschluss auf. Der Zwischenspeicher 26 kann ein Niederdruckspeicher sein. Die Ausgangsseite der Pumpe 28 ist über eine Zwischenspeicher-Zuführleitung 27 mit dem Zwischenspeicher 26 verbunden. Eine dritte Ventilanordnung 38 ist vorgesehen, um die Zwischenspeicher-Zuführleitung 27 zwischen der Ausgangsseite der Pumpe 28 und dem Zwischenspeicher 26 wahlweise zu sperren oder zu öffnen.

Eine Zwischenspeicher-Rückführleitung 31 verbindet den Zwischenspeicher, genauer gesagt den zweiten Anschluss des Zwischenspeichers 26, mit der Eingangsseite der Pumpe 28. In der Zwischenspeicher-Rückführleitung 31 ist ein erstes Sperrventil 33 vorgesehen. Das erste Sperrventil 33 kann ein Rückschlagventil sein. Die Durchlassrichtung des ersten Sperrventils 33 ist vom Zwischenspeicher 26 zur Eingangsseite der Pumpe 28. Somit ermöglicht das erste Sperrventil 33 das Entleeren des Zwischenspeichers 26 hin zur Eingangsseite der Pumpe 28 und verhindert ein Füllen des Zwischenspeichers 26, zum Beispiel durch das von den Radbremsen 24a, 24b über die Rückführleitungen 22a, 22b zurückströmende Hydraulikfluid. Entsprechend kann der Zwischenspeicher 26 nur gefüllt werden, wenn sich die dritte Ventilanordnung 38 in Durchlassstellung befindet.

Die ersten bis fünften Ventilanordnungen 30, 32, 34, 36, 38, 39, 40 können zum Beispiel elektromagnetisch betätigbare 2/2-Wege-Ventile sein. Die ersten und vierten Ventilanordnungen 30, 32, 39 sind in Normalstellung geöffnete Ventilanordnungen, die in Normalstellung (unbestromt) einen Durchfluss von Hydraulikfluid erlauben. Die zweiten, dritten und fünften Ventilanordnungen 34, 36, 38, 40 sind in Normalstellung geschlossene Ventilanordnungen, die in Normalstellung (unbestromt) einen Durchfluss von Hydraulikfluid verhindern. Jedoch ist es ebenso möglich, andere Ventile zum Erreichen der gleichen Wirkung zu verwenden. Darüber hinaus sind die ersten, zweiten und vierten Ventilanordnungen 30, 32, 34, 36 und 39 jeweils durch ein Rückschlagventil, das zur Druckbegrenzung dient, überbrückt. An dieser Stelle wird lediglich das Rückschlagventil der vierten Ventilanordnung 39 hervorgehoben. Dieses Rückschlagventil kann auch als zweites Sperrventil 35 bezeichnet werden.

Zudem ist in Fig. 1 eine Steuereinheit 42 dargestellt. Die Steuereinheit 42 ist mit den Ventilanordnungen elektrisch leitend verbunden und dazu eingerichtet, den Ventilanordnungen Schaltzustände vorzugeben. Die Steuereinheit 42 ist auch mit einem Motor der Pumpe 28 elektrisch leitend verbunden und dazu eingerichtet, die Förderleistung der Pumpe 28 vorzugeben. So kann zum Beispiel die Steuereinheit 42 ein Pulsweitenmodulationssignal (PWM-Signal) ausgeben und dadurch die Drehzahl der Pumpe 28 vorgeben. Aus Gründen der Übersichtlichkeit sind die jeweiligen elektrischen Verbindungen nicht dargestellt.

In Fig. 1 ist ferner eine elektrische Maschine 44 angedeutet. Die elektrische Maschine 44 ist dazu eingerichtet, während eines Verzögerungsvorgangs kinetische Energie des Landfahrzeugs in elektrische Energie umzuwandeln. Somit erzeugt die elektrische Maschine 44 ein generatorisches Bremsmoment. Die elektrische Maschine 44 kann Teil des Antriebsstrangs des Landfahrzeugs sein. Ebenso kann die elektrische Maschine ein Generator sein, der unabhängig vom Antriebsstrang mit den Rädern des Landfahrzeugs gekoppelt ist und speziell zur Umwandlung von kinetischer Energie in elektrische Energie vorgesehen ist.

Ferner kann an dem Bremspedal 12 ein Pedalwegsensor zur Erfassung der Betätigung des Bremspedals 12 angeordnet sein. Weitere Komponenten eines hydraulischen Fahrzeugbremssystems sind hier aus Gründen der Übersichtlichkeit nicht dargestellt. Ein Fahrzeugbremssystem kann weitere Komponenten, wie zum Beispiel Sensoren, aufweisen, wobei diese zum Verständnis des vorliegenden Fahrzeugbremssystems nicht zwingend erforderlich sind.

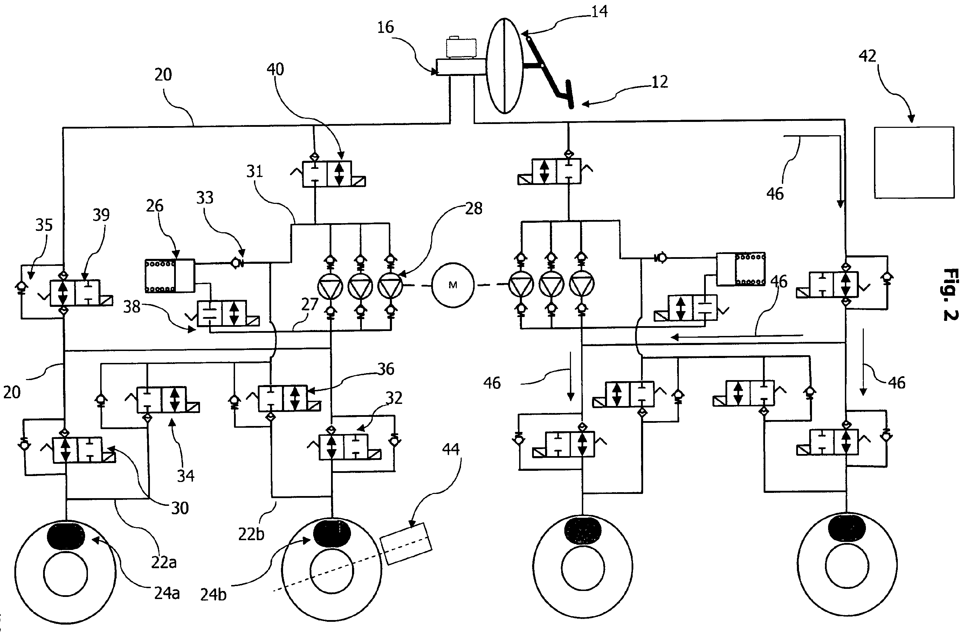

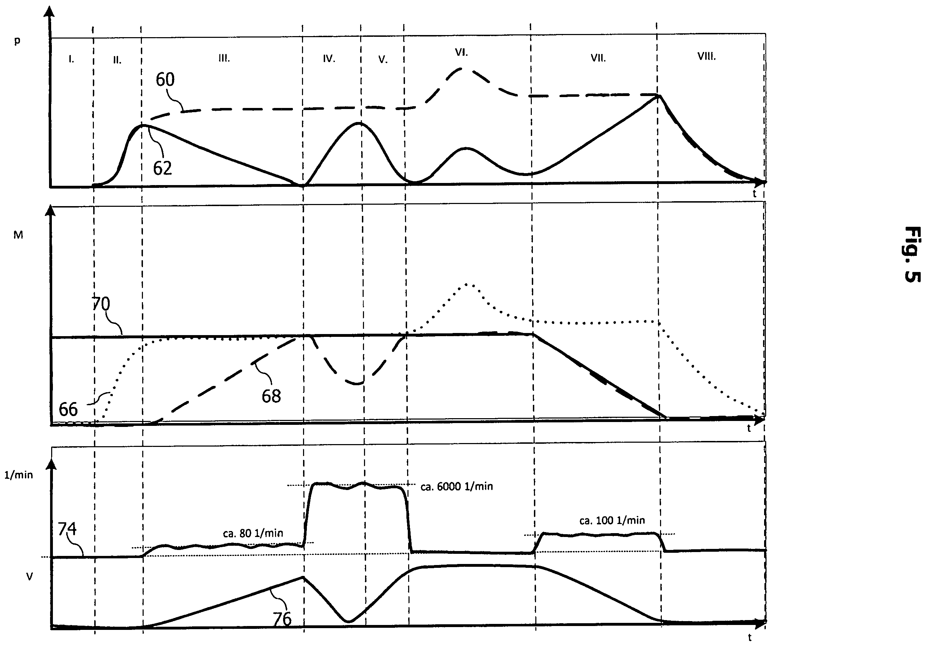

Fig. 2 zeigt eine schematische Darstellung des Fahrzeugbremssystems 10, wobei sich die Ventilanordnungen in einer ersten Schaltstellung befinden. Der dabei dargestellte Zustand des Fahrzeugbremssystems 10 entspricht dem zweiten Abschnitt II. aus Fig. 5. Bei dem in Fig. 2 dargestellten ersten Schaltzustand der Ventilanordnungen befinden sich die ersten und vierten Ventilanordnungen 30, 32, 39 in Durchlassstellung und die zweiten und dritten Ventilanordnungen 34, 36, 38 in Sperrstellung.

Betätigt der Fahrer das Bremspedal 12, wird über die geöffneten ersten und vierten Ventilanordnungen 30, 32, 39 den Radbremsen 24a, 24b Hydraulikfluid entsprechend dem Fahrerbremswunsch aufgrund der Stellung des Bremspedals 12 aus dem Bremsflüssigkeitsbehälter 18 mittels des Hauptzylinders 16 zugeführt. Die Pfeile 46 deuten die Zufuhr von Hydraulikfluid an.

Somit erfolgt der Aufbau des Bremsdrucks in der gleichen Weise wie bei einem rein hydraulischen Bremsvorgang. Daher kann die natürliche Pedalrückwirkung, das Geräuschniveau und der Verzögerungswirkungsverlauf einer herkömmlichen Bremsvorrichtung erhalten werden.

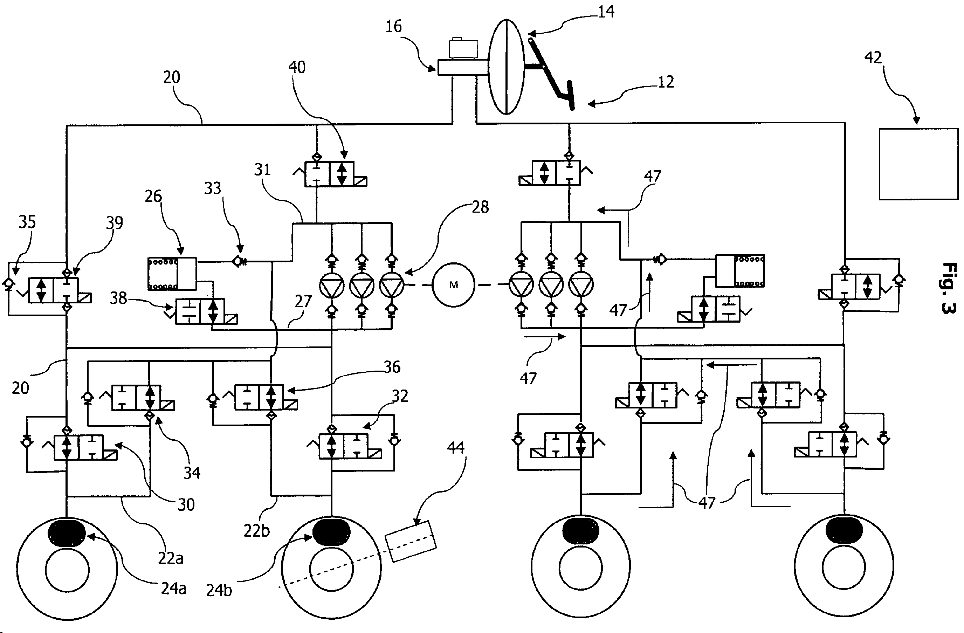

Fig. 3 zeigt eine schematische Darstellung des Fahrzeugbremssystems 10, wobei sich die Ventilanordnungen in einer zweiten Schaltstellung befinden. Der dargestellte Zustand entspricht dem dritten Abschnitt III. aus Fig. 5.

Ist ein Druckaufbau des Hydraulikfluids erfolgt und findet keine weitere Betätigung des Bremspedals 12 durch den Fahrer statt, d.h. das Bremspedal 12 wird in einer Betätigungsstellung gehalten, wird die vierte Ventilanordnung 39 durch die Steuereinheit 42 geschlossen und die zweiten und dritten Ventilanordnungen 34, 36, 38 durch die Steuereinheit 42 geöffnet. Zudem steuert die Steuereinheit 42 die Pumpe 28 derart, dass sie Hydraulikfluid von den Radbremsen 24a, 24b über die geöffneten zweiten Ventilanordnungen 34, 36 an der Eingangsseite der Pumpe 28 ansaugt und über die Ausgangsseite der Pumpe 28 und die dritte Ventilanordnung 38 dem Zwischenspeicher 26 zuführt, um den durch die Betätigung des Bremspedals 12 herrschenden Druck an den Radbremsen 24a, 24b abzubauen. Die Pfeile 47 zeigen die Zufuhr von Hydraulikfluid von den Radbremsen 24a, 24b über die Pumpe 28 zu dem Zwischenspeicher 26. Die erste Ventilanordnung 30, 32 kann sich dabei in Sperrstellung oder, so wie in Fig. 3 dargestellt, in Durchlassstellung befinden.

Sobald der Bremsdruck durch die Volumenverschiebung in den Zwischenspeicher 26 einen bestimmten Wert unterscheitet, der der Vorspannkraft des ersten Sperrventils 33 entspricht, öffnet sich das erste Sperrventil 33. Dadurch kann die Pumpe 28 Hydraulikfluid aus dem Zwischenspeicher 26 ansaugen. Da die Pumpe 28 das Hydraulikfluid weiterhin in den Zwischenspeicher 26 fördert, wird das Hydraulikfluid, nachdem sich das erste Sperrventil 33 geöffnet hat, lediglich umgewälzt.

Durch die geschlossene vierte Ventilanordnung 39 bleibt der Druck zwischen der vierten Ventilanordnung 39 und dem Hauptzylinder 16 bzw. dem Bremspedal 12 gleich, so dass der Fahrer keine Veränderung wahrnimmt.

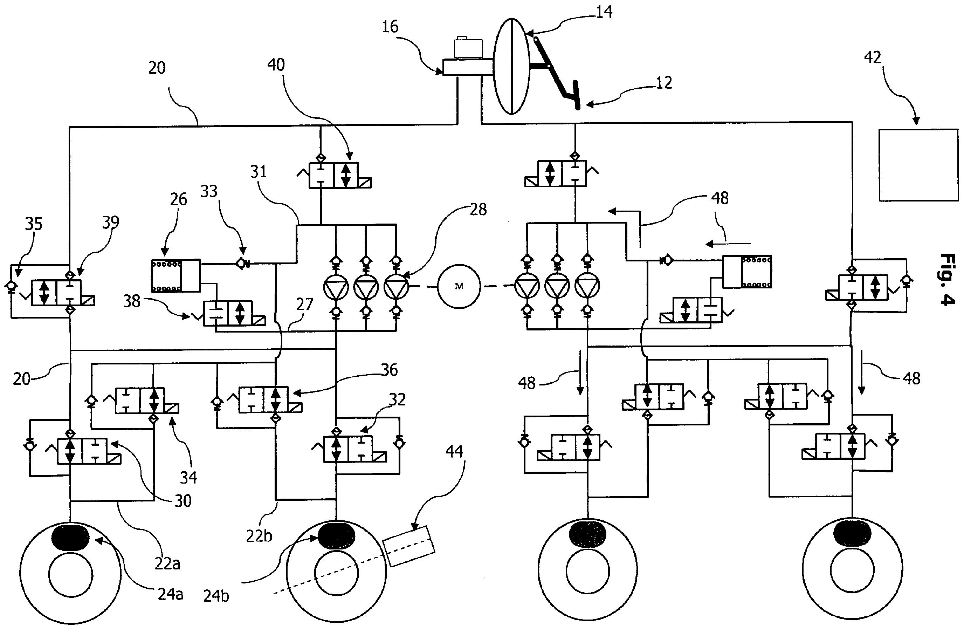

Fig. 4 zeigt eine schematische Darstellung des Fahrzeugbremssystems 10, wobei sich die Ventilanordnungen in einem dritten Schaltzustand befinden. Der dargestellte Zustand entspricht dem siebten Abschnitt VII. aus Fig. 5.

Im dritten Schaltzustand befindet sich die ersten Ventilanordnungen 30, 32 in Durchlassstellung und die dritte Ventilanordnung 38 in Sperrstellung. Die Pumpe 28 fördert Hydraulikfluid aus dem Zwischenspeicher 26 in die Radbremsen 24a, 24b. Durch die Förderleistung der Pumpe 28 kann die Geschwindigkeit der Volumenverschiebung eingestellt werden. So kann eine höhere Förderleistung der Pumpe einen schnelleren Druckaufbau in den Radbremsen 24a, 24b bewirken. Die zweiten Ventilanordnungen 34, 36 können sich dabei in Sperrstellung oder, so wie in Fig. 4 dargestellt, in Durchlassstellung befinden. Die Pfeile 48 verdeutlichen die Volumenverschiebung von dem Zwischenspeicher 26 zu den Radbremsen 24a, 24b.

Das oberste Diagramm der Fig. 5 zeigt den Verlauf des Hydraulikfluiddrucks in einem rein hydraulischen Fahrzeugbremssystem / bei einem rein hydraulischen Bremsvorgang und bei einem regenerativen Bremsvorgang über die Zeit. Die Linie 60 zeigt den Druckverlauf des Hydraulikfluids bei einem rein hydraulischen Bremsvorgang und die Linie 62 zeigt den Druckverlauf des Hydraulikfluids bei einem regenerativen Bremsvorgang.

Das mittlere Diagramm der Fig. 5 zeigt das gesamte Bremsmoment des Landfahrzeugs, also das kombinierte Bremsmoment 66 der Radbremsen 24a, 24b und der elektrischen Maschine 44. Ferner zeigt das mittlere Diagramm das Bremsmoment 68 der elektrischen Maschine 44, sowie die Bremskapazität 70 der elektrischen Maschine 44. Das untere Diagramm der Fig. 5 zeigt den Drehzahlverlauf 74 der Pumpe 28 und den Verlauf 76 des in dem Zwischenspeicher 26 aufgenommenen Hydraulikfluidvolumens.

Die Verläufe sowie die weiteren Darstellungen in Fig. 5 sind in acht Abschnitte unterteilt, wobei der erste Abschnitt I. den Zustand darstellt, in welchem keine Betätigung des Bremspedals 12 vorliegt und somit das Fahrzeugbremssystem 10 inaktiv ist.

Der zweite Abschnitt II. stellt den Zustand dar, in dem das Bremspedal 12 betätigt und ein Bremsvorgang eingeleitet wird. Die Ventilanordnungen befinden sich dabei in der in Fig. 2 dargestellten ersten Schaltstellung. In dieser Schaltstellung erfolgt der Druckaufbau in den Radbremsen in vergleichbarer Weise wie bei einem rein hydraulischen Bremsvorgang.

Im dritten Abschnitt III. befinden sich die Ventilanordnungen in der in Fig. 3 dargestellten zweiten Schaltstellung. Der dritte Abschnitt III. stellt den Zustand dar, in welchem der Druck des Hydraulikfluids, bei gleichbleibender Auslenkung des Bremspedals 12, bei einem rein hydraulischen Bremsvorgang im Wesentlichen auf einem konstanten Niveau gehalten wird, und bei einem regenerativen Bremsvorgang, wie hierin beschrieben, allmählich abgebaut wird. Während der Bremsdruck 62 in den Radbremsen 24a, 24b abgebaut wird, wird in der elektrischen Maschine 44 des Landfahrzeugs ein generatorisches Bremsmoment 68 aufgebaut. Also wird im dritten Abschnitt III. generatorisches Bremsmoment 68 eingeblendet und das Bremsmoment des Fahrzeugbremssystems 10 ausgeblendet. Dieser Vorgang kann auch als "Blending" bezeichnet werden. Der Übergang von der hydraulischen Bremsung durch die Radbremsen 24a, 24b zur generatorischen Bremsung durch die elektrische Maschine 44 erfolgt dabei allmählich. Der Wechsel von rein hydraulischer Bremsung zu rein generatorischer Bremsung kann sukzessive erfolgen, d.h. ein kontinuierlicher Anstieg bzw. Abfall wie in den Figuren dargestellt oder aber auch schrittweise bzw. stufenweise. Des Weiteren wäre auch ein exponentieller Anstieg bzw. Abfall möglich.

Die Steuereinheit 42 oder eine speziell der elektrischen Maschine 44 zugeordnete Steuereinrichtung kann dabei das Maß in welchem die elektrische Maschine 44 generatorisch zur Erzielung einer Bremsung an den Rädern des Fahrzeugs betrieben wird steuern. Zudem steuert die Steuereinheit 42 in welchem Maß Hydraulikfluid von den Radbremsen 24a, 24b in den Zwischenspeicher 26 gefördert wird. Da der Druckabbau in den Radbremsen 24a, 24b insbesondere aus einer Volumenverschiebung von Hydraulikfluid von den Radbremsen 24a, 24b zu dem Zwischenspeicher 26 resultiert und die Geschwindigkeit der Volumenverschiebung durch die Förderleistung der Pumpe 28 bestimmt wird, kann der Abbau des Bremsmoments der Radbremsen 24a, 24b durch die Steuereinheit 42 vorgegeben werden. Zum Beispiel kann die Steuereinheit 42, wie im unteren Diagramm der Fig. 5 dargestellt, der Pumpe 28 eine Drehzahl von ungefähr 80 Umdrehungen pro Minute vorgeben. Die exakte Drehzahl der Pumpe 28 hängt dabei von dem jeweiligen Bremsvorgang und den Parametern des Bremssystems ab. Allerdings sollte hervorgehoben werden, dass die Pumpe zum Ausblenden des Bremsdrucks im Teillastbereich betrieben wird.

Die Förderleistung der Pumpe 28 kann von der Steuereinheit 42 zum Beispiel durch ein PWM-Signal vorgegeben werden. Zudem kann durch die Verwendung von hintereinandergeschalteten Reglern, wie zum Beispiel einem hintereinandergeschalteten Drehzahlsteller und Drehzahlregler, eine hohe Regelgüte der Pumpendrehzahl erreicht werden. Dementsprechend kann die Förderleistung der Pumpe 28 sehr exakt von der Steuereinheit 42 vorgegeben werden.

Über die Steuerung der Förderleistung der Pumpe 28, zum Beispiel durch die Vorgabe einer Drehzahl in Form eines PWM-Signals, kann somit das Ausblenden des Bremsmoments der Radbremsen 24a, 24b sehr exakt an das Einblenden des generatorischen Bremsmoments 68 angepasst werden. Dabei wird zu jedem Zeitpunkt das gesamte an einem Rad des Fahrzeugs erzielte Bremsmoment 66 konstant gehalten oder zumindest in einem vorzugebenden Toleranzbereich gehalten. Der Toleranzbereich kann zum Beispiel derart vorgegeben werden, dass Bremsmomentabweichungen die vom Fahrer nicht wahrgenommen werden können zulässig sind. Somit kann das gesamte Bremsmoment dem vom Fahrer über die Stellung des Bremspedals 12 vorgegebenen Bremswunsch entsprechen. Durch die genaue Vorgabe der Drehzahl können die vom Fahrer wahrnehmbaren Unterschiede zwischen einem rein hydraulischen Bremsvorgang und einem regenerativen Bremsvorgang minimiert werden, so dass dem Fahrer ein komfortables Bremsgefühl vermittelt wird.

Dabei kann die Steuereinheit 42 über weitere Einrichtungen, wie Sensoren und dergleichen, welche ohnehin in dem Fahrzeug verwendet werden, das Maß der Bremsung durch die elektrische Maschine 44 und den Bremsdruck 62 an den Radbremsen 24a, 24b ermitteln und zur Bestimmung der erforderlichen Pumpendrehzahl heranziehen.

Im vierten Abschnitt IV. und dem fünften Abschnitt V. ist eine Schwankung des Bremsmoments der elektrischen Maschine 44 dargestellt. Derartige Schwankungen können zum Beispiel dadurch verursacht werden, dass der Fahrer oder ein Automatikgetriebe herunterschaltet, also ein niedrigerer Gang eingelegt wird. So geht im vierten Abschnitt IV. das generatorische Bremsmoment 68 deutlich zurück und steigt danach im fünften Abschnitt V. wieder an.

Bei einem rein hydraulischen Bremsvorgang hat ein Gangwechsel keine Auswirkungen auf den Verlauf des hydraulischen Bremsdrucks. Daher bleibt der durch den Verlauf der Line 60 dargestellte Druckverlauf unverändert. Bei einem regenerativen Bremsvorgang müssen die Schwankungen des generatorischen Bremsmoments 68 der elektrischen Maschine 44 jedoch kompensiert werden. So kann, wie in dem oberen Diagramm der Fig. 5 dargestellt, der Bremsdruck 62 in den Radbremsen 24a, 24b im vierten Abschnitt IV. erhöht werden und im fünften Abschnitt V. wieder reduziert werden, um die Schwankungen des generatorischen Bremsmoments 68 auszugleichen.

Der Anstieg des Bremsdrucks 62 im vierten Abschnitt IV. wird durch die Steuereinheit 42 gesteuert. So steuert die Steuereinheit 42 zumindest die dritte Ventilanordnung 38 derart an, dass sich diese in Sperrstellung befindet. Zudem kann die Steuereinheit 42 der Pumpe 28 zum Beispiel eine höhere Drehzahl vorgeben. Beispielsweise kann der Pumpe 28 ein Drehzahl von 6000 Umdrehungen pro Minute vorgeben werden. Dies kann der maximalen Drehzahl der Pumpe 28 entsprechen oder anders ausgedrückt, die Pumpe 28 wird im Volllastbereich betrieben. Durch eine höhere Drehzahl der Pumpe 28 kann die Förderleistung der Pumpe 28 erhöht werden. Eine höhere Förderleistung wiederum bewirkt eine schnellere Volumenverschiebung und somit einen schnelleren Druckanstieg in den Radbremsen 24a, 24b. Wegen der Volumenverschiebung von dem Zwischenspeicher 26 zu den Radbremsen 24a, 24b nimmt das im Zwischenspeicher 26 aufgenommene Hydraulikfluidvolumen 76, wie im unteren Diagramm der Fig. 5 dargestellt, stark ab.

Die Reduzierung des Bremsdrucks 62 im fünften Abschnitt V. wird ebenfalls durch die Steuereinheit 42 gesteuert. So steuert die Steuereinheit 42 zumindest die dritte Ventilanordnung 38 derart an, dass sich diese in Durchlassstellung befindet. Zudem gibt die Steuereinheit 42 der Pumpe 28 eine Drehzahl vor. Diese kann zum Beispiel ungefähr der für den vierten Abschnitt IV. vorgegebenen Drehzahl entsprechen.

Durch den vorgegebenen Schaltzustand der Ventilanordnungen und durch die Förderleistung der Pumpe kommt es zu einer Volumenverschiebung von den Radbremsen 24a, 24b zum dem Zwischenspeicher 26. Entsprechend steigt das im Zwischenspeicher 26 aufgenommene Hydraulikfluidvolumen 76, so wie in dem unteren Diagramm der Fig. 5 dargestellt, wieder an.

In dem sechsten Abschnitt VI. wird bei einem rein hydraulischen Bremsvorgang bei einer weiteren Betätigung des Bremspedals 12 zusätzliches Hydraulikfluid den Radbremsen zugeführt, wobei der Druck in den Bremsleitungen des Fahrzeugbremssystems bzw. der Bremsdruck 60 an den Radbremsen entsprechend zunimmt.

Bei einem regenerativen Bremsvorgang wird die vierte Ventilanordnung 39 von der Steuereinheit 42 geöffnet. Dadurch kann eine der weiteren Betätigung entsprechende Menge Hydraulikfluid von dem Hauptzylinder 16 zu den Radbremsen 24a, 24b strömen. Die zusätzliche Menge Hydraulikfluid bewirkt dann einen Anstieg des Bremsdrucks 62 und damit des Bremsmoments der Radbremsen 24a, 24b. Reduziert daraufhin der Fahrer den Druck auf das Bremspedal 12, d.h. wird das Bremspedal 12 weniger stark von dem Fahrer betätigt, reduziert sich dementsprechend der Bremsdruck 62, wobei Hydraulikfluid von den Radbremsen 24a, 24b zurück zum Hauptzylinder 16 strömt. Sofern die vierte Ventilanordnung 39 bei der Reduzierung des Bremsdrucks durch den Fahrer bereits geschlossen sein sollte, kann der Druckabbau auch durch die Pumpe 28 und eine Volumenverschiebung von den Radbremsen 24a, 24b zu dem Zwischenspeicher 26 erfolgen.

Während die vierte Ventilanordnung 39 geöffnet ist, und während der weiteren Betätigung des Bremspedals 12 durch den Fahrer, kann die Förderleistung oder genauer gesagt die Drehzahl der Pumpe 28 auf null reduziert werden, so wie im unteren Diagramm der Fig. 5 dargestellt. Zudem kann die zweite Ventilanordnung 34, 36 durch die Steuereinheit 42 geschlossen werden, so dass im sechsten Abschnitt VI. die weitere Betätigung des Bremspedals 12 einen ähnlichen Effekt hat, wie in einem rein hydraulischen Fahrzeugbremssystem.

Alternativ kann die Volumenverschiebung zwischen Hauptzylinder 16 und den Radbremsen 24a, 24b auch durch das zweite Sperrventil 35 erfolgen. Dazu muss der Druck im Hauptzylinder 16 jedoch die Vorspannkraft des zweiten Sperrventils 35 übersteigen.

Bei dem in Fig. 5 dargestellten Beispiel verbleibt der Bremsdruck 60 etwas oberhalb des ursprünglich vom Fahrer eingestellten Bremsdrucks. Da nun der vom Fahrer vorgegebene Bremswunsch die Bremskapazität 70 der elektrischen Maschine 44 übersteigt, steuert die Steuereinheit das Bremssystem derart, dass nach der weiteren Betätigung des Bremspedals 12 ein geringer Restdruck 62 in den Radbremsen 24a, 24b verbleibt, so dass das gesamte Bremsmoment 66 dem vom Fahrer vorgegebenen Bremswunsch entspricht.

Der siebte Abschnitt VII. entspricht der in Fig. 4 dargestellten dritten Schaltstellung der Ventilanordnungen und zeigt den Zustand eines regenerativen Fahrzeugbremssystems, in welchem bei abnehmender Fahrzeuggeschwindigkeit der Druck in den Bremsleitungen des Fahrzeugs zur Erzielung eines Bremsdrucks an den Radbremsen 24a, 24b allmählich wieder aufgebaut wird. In dem rein hydraulischen Fahrzeugbremssystem ist der Druck 60 hingegen weiterhin auf dem gleichen Niveau wie nach der Erhöhung des Drucks durch die weitere Betätigung des Bremspedals 12.

Nimmt die Fahrzeuggeschwindigkeit aufgrund der Bremsung des Fahrzeugs ab, reduziert sich auch die von der elektrischen Maschine 44 zur Verfügung gestellte Bremsleistung. Daher wird die dritte Ventilanordnung 38 durch die Steuereinheit 42 geschlossen und Hydraulikfluid von dem Zwischenspeicher 26 mittels der Pumpe 28 allmählich den Radbremsen 24a, 24b zugeführt, so dass sich wieder eine dem Fahrerbremswunsch entsprechende hydraulische Bremswirkung an den Rädern des Fahrzeugs einstellt. Gleichzeitig wird die von der elektrischen Maschine bereitgestellte generatorische Bremsung der Räder allmählich reduziert. Dabei werden die Pumpe 28 und die elektrische Maschine 44 so gesteuert, dass ein allmählicher Wechsel von der rein generatorischen zu der rein hydraulischen Bremsung stattfindet, wobei das gesamte Bremsmoment 66 an den Rädern des Fahrzeugs durch eine entsprechende Steuerung mittels der Steuereinheit 42 zu jedem Zeitpunkt konstant gehalten wird oder zumindest innerhalb eines vorzugebenden Toleranzbereichs gehalten wird Der Toleranzbereich kann dabei derart gewählt sein, dass Abweichungen innerhalb des Toleranzbereichs vom Fahrer nicht wahrgenommen werden können. Der Verlauf des gesamten Bremsmoments 66, bereitgestellt durch das Fahrzeugbremssystem 10 und der generatorisch betriebenen elektrischen Maschine 44, entspricht daher dem Bremsmomentverlauf eines rein hydraulischen Fahrzeugbremssystems.

Wie im unteren Diagramm der Fig. 5 dargestellt, erfolgt im siebten Abschnitt VII. eine Volumenverschiebung von dem Zwischenspeicher 26 über die Pumpe 28 zu den Radbremsen 24a, 24b. Entsprechend nimmt das im Zwischenspeicher 26 aufgenommene Hydraulikfluidvolumen ab. Zum Aufbau des Bremsdrucks an den Radbremsen 24a, 24b gibt die Steuereinheit 42 der Pumpe 28 eine Drehzahl vor. Die Drehzahl der Pumpe 28 kann zum Beispiel ungefähr 100 Umdrehungen pro Minute betragen und im Teillastbereich der Pumpe 28 liegen.

Durch die Volumenverschiebung vom Zwischenspeicher 26 zu den Radbremsen 24a, 24b steigt das Bremsmoment der Radbremsen 24a, 24b. In vergleichbarer Weise wie im dritten Abschnitt III. kann die Steuereinheit 42 den Druckaufbau durch die Förderleistung der Pumpe 28 steuern. Ob der Bremsdruck auf- oder abgebaut wird, ergibt sich lediglich aus der Schaltstellung der dritten Ventilanordnung 38. Befindet sich diese in Durchlassstellung, fördert die Pumpe 28 in den Zwischenspeicher 26, so dass Bremsdruck abgebaut wird. Befindet sich diese in Sperrstellung, fördert die Pumpe 28 aus dem Zwischenspeicher 26, so dass Bremsdruck aufgebaut wird.

Der achte Abschnitt VIII. stellt den Zustand dar, in dem der Fahrer den Druck auf das Bremspedal reduziert. Da im vorhergehenden siebten Abschnitt VII. der Bremsdruck in den Radbremsen 24a, 24b wieder auf das Niveau der rein hydraulischen Bremsung erhöht wurde, kann durch das Öffnen der vierten Ventilanordnung 39 dem Fahrer eine Pedalrückwirkung wie bei einem rein hydraulischen Bremsvorgang vermittelt werden. Entsprechend kann der Fahrer, nachdem das Fahrzeug ausreichend abgebremst wurde oder sich im Stillstand befindet, den Bremsdruck in gewohnter Weise reduzieren. Da die vierte Ventilanordnung 39 geöffnet ist, kann das Hydraulikfluid zum Bremsflüssigkeitsbehälter 18 und / oder dem Hauptzylinder 16 zurückströmen.

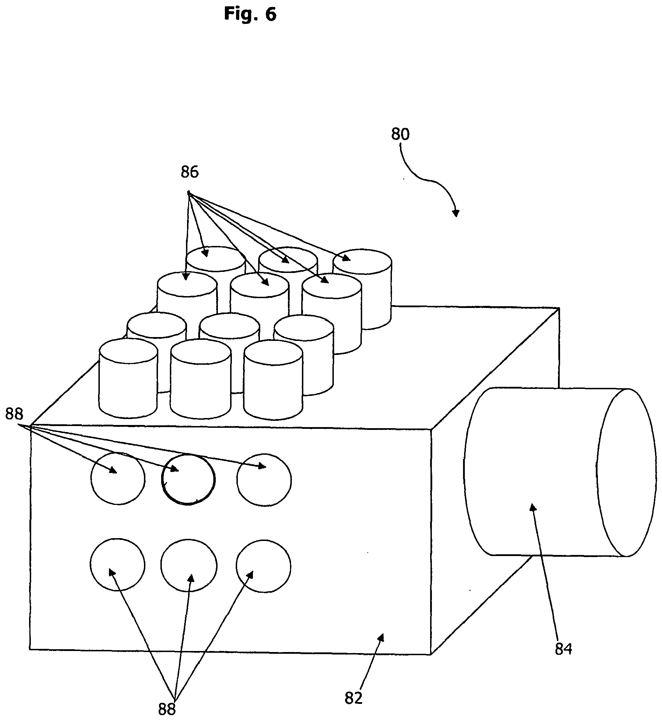

Die Fig. 6 ist eine schematische Darstellung eines Hydraulikaggregats 80. Das Hydraulikaggregat 80 umfasst einen Metallkörper 82, der zum Beispiel aus Aluminium gefertigt sein kann. Im Inneren des Metallkörper 82 sind zumindest die Pumpe 28, die ersten, zweiten und dritten Ventilanordnungen 30, 32, 34, 36, 38 aufgenommen. In der Fig. 6 sind lediglich der Motor 84 der Pumpe 28 und einige der Spulenkörper 86 zum Betätigen der Ventile sichtbar. Zudem können in dem Hydraulikaggregat 80 hydraulische Verbindungen, die vierten und fünften Ventilanordnungen 39, 40, sowie das erste und zweite Sperrventil 33, 35 aufgenommen sein. Diese befinden sich allerdings im Inneren des Metallkörpers und sind daher nicht sichtbar.

Das in Fig. 6 dargestellte Hydraulikaggregat 80 umfasst ferner hydraulische Anschlüsse 88 an denen die Radbremsen 24a, 24b und der Hauptzylinder 16 angeschlossen werden können. Zudem können an dem Hydraulikaggregat 80 ein oder mehrere Zwischenspeicher angebracht sein. Alternativ können an dem Hydraulikaggregat 80 auch weitere Anschlüsse 88 für einen oder mehrere Zwischenspeicher 26 vorgesehen sein. Schließlich kann an dem Hydraulikaggregat 80 die Steuereinheit 42 angebracht sein.

## Patentansprüche

1. Bremssystem (10) für ein Landfahrzeug mit:
- zumindest einer einem Rad des Landfahrzeugs zuzuordnenden Radbremse (24a, 24b);
- einer Pumpe (28) mit variabler Förderleistung, die dazu eingerichtet ist, Hydraulikfluid von ihrer Eingangsseite zu ihrer Ausgangsseite zu fördern;
- zumindest einem Zwischenspeicher (26) zur Aufnahme von Hydraulikfluid;
- einer hydraulischen Verbindung (31) zwischen dem Zwischenspeicher (26) und der Eingangsseite der Pumpe (28);
- zumindest einer ersten Ventilanordnung (30, 32) zum Sperren einer hydraulischen Verbindung (20) zwischen der Ausgangsseite der Pumpe (28) und der zumindest einen Radbremse (24a, 24b);
- zumindest einer zweiten Ventilanordnung (34, 36) zum Sperren einer hydraulischen Verbindung (22a, 22b) zwischen der zumindest einen Radbremse (24a, 24b) und der Eingangsseite der Pumpe (28);
- zumindest einer dritten Ventilanordnung (38) zum Sperren einer hydraulischen Verbindung (27) zwischen der Ausgangsseite der Pumpe (28) und dem Zwischenspeicher (26),
**dadurch gekennzeichnet, dass**
das Hydraulikfluid mittels der Pumpe (28) von der zumindest einen Radbremse (24a, 24b) direkt in den Zwischenspeicher (26) förderbar ist, wodurch Bremsdruck in der zumindest einen Radbremse (24a, 24b) abbaubar ist, und dass das Hydraulikfluid von dem Zwischenspeicher (26) in die wenigstens eine Radbremse (24a, 24b) förderbar ist, wodurch Bremsdruck in der wenigstens einen Radbremse (24a, 24b) aufbaubar ist,
wobei der Druckaufbau und der Druckabbau in der zumindest einen Radbremse (24a, 24b) durch Öffnen oder Schließen der zumindest einen dritten Ventilanordnung (38) unterscheidbar sind, so dass bei geöffneter dritter Ventilanordnung (38) Bremsdruck in der zumindest einen Radbremse (24a, 24b) abbaubar ist und bei geschlossener dritter Ventilanordnung (38) Bremsdruck in der zumindest einen Radbremse (24a, 24b) aufbaubar ist.

2. Bremssystem nach Anspruch 1, wobei das Bremssystem eine Steuereinheit (42) umfasst, die dazu eingerichtet ist, während eines regenerativen Bremsvorgangs den Ventilanordnungen (30, 32, 34, 36, 38) Schaltstellungen derart vorzugeben und die Pumpe (28) derart anzusteuern,
dass die Pumpe (28) Hydraulikfluid von der zumindest einen Radbremse (24a, 24b) zu dem Zwischenspeicher (26) fördert, während in einer elektrischen Maschine (44) des Landfahrzeugs ein generatorisches Bremsmoment (68) aufgebaut wird, um kinetische Energie des Landfahrzeugs in elektrische Energie umzuwandeln.

3. Bremssystem nach Anspruch 2, wobei die Steuereinheit (42) dazu eingerichtet ist, die Förderleistung der Pumpe (28) und die Schaltstellungen der Ventilanordnungen (30, 32, 34, 36, 38) derart vorzugeben, dass zu jedem Zeitpunkt die Summe aus generatorischen Bremsmoment (68) und dem Bremsmoment der zumindest einen Radbremse gleich bleibt oder innerhalb einer vorzugebenden Toleranzgrenze bleibt.

4. Bremssystem nach einem der Ansprüche 2 oder 3, wobei die Steuereinheit (42) ferner dazu eingerichtet ist, zum Ausgleichen von Schwankungen des generatorischen Bremsmoments (68), die Förderleistung der Pumpe (28) zu verändern, insbesondere zum Ausgleich eines Rückgangs des generatorischen Bremsmoments (68) die Förderleistung der Pumpe (28) zu erhöhen.

5. Bremssystem nach einem der Ansprüche 2 bis 4, wobei zumindest eine vierte Ventilanordnung (39) zum Sperren einer hydraulischen Verbindung (20) zwischen einem Hauptzylinder (16) und der zumindest einen Radbremse (24a, 24b) vorgesehen ist, und wobei die Steuereinheit (42) die Schaltstellung der zumindest einen vierten Ventilanordnung (39) derart vorgibt,
dass eine Betätigung eines Bremspedals (12) des Landfahrzeugs eine Volumenverschiebung von dem Hauptzylinder (16) zu der zumindest einen Radbremse (24a, 24b) bewirkt, und
dass während des Aufbaus des generatorischen Bremsmoments (68) die zumindest eine vierte Ventilanordnung (39) die hydraulische Verbindung (20) zwischen dem Hauptzylinder (16) und der zumindest einen Radbremse (24a, 24b) sperrt.

6. Bremssystem nach einem der Ansprüche 2 bis 5, wobei die Steuereinheit (42) die Schaltstellung der Ventilanordnungen (30, 32, 34, 36, 38) derart vorgibt, dass das Fördern der Pumpe (28) in einer Schaltstellung der Ventilanordnungen (30, 32, 34, 36, 38) eine Reduzierung des Bremsdrucks in der zumindest einen Radbremse (24a, 24b) bewirkt und in einer weiteren Schaltstellung der Ventilanordnungen (30, 32, 34 ,36, 38) eine Zunahme des Bremsdrucks in der zumindest einen Radbremse (24a, 24b) bewirkt.

7. Bremssystem nach einem der vorhergehenden Ansprüche, wobei ein erstes Sperrventil (33), vorzugsweise ein Rückschlagventil, vorgesehen ist,
- um eine hydraulische Verbindung zwischen dem Zwischenspeicher (26) und der zumindest einen zweiten Ventilanordnung (34, 36) zumindest in Richtung von der zumindest einen zweiten Ventilanordnung (34, 36) zum Zwischenspeicher (26) zu sperren und / oder
- um die hydraulische Verbindung (31) zwischen dem Zwischenspeicher (26) und der Eingangsseite der Pumpe (28) zumindest in Richtung von der Eingangsseite der Pumpe (28) zum Zwischenspeicher (26) zu sperren.

8. Hydraulikaggregat (80) für ein Bremssystem mit zumindest einer einem Rad eines Landfahrzeugs zuzuordnenden Radbremse (24a, 24b), einer Pumpe (28) mit variabler Förderleistung, die dazu eingerichtet ist, Hydraulikfluid von ihrer Eingangsseite zu ihrer Ausgangsseite zu fördern, zumindest einem Zwischenspeicher (26) zur Aufnahme von Hydraulikfluid, einer hydraulischen Verbindung (31) zwischen dem Zwischenspeicher (26) und der Eingangsseite der Pumpe (28), zumindest einer ersten Ventilanordnung (30, 32) zum Sperren einer hydraulischen Verbindung (20) zwischen der Ausgangsseite der Pumpe (28) und der zumindest einen Radbremse (24a, 24b), zumindest einer zweiten Ventilanordnung (34, 36) zum Sperren einer hydraulischen Verbindung (22a, 22b) zwischen der zumindest einen Radbremse (24a, 24b) und der Eingangsseite der Pumpe (28), und zumindest einer dritten Ventilanordnung (38) zum Sperren einer hydraulischen Verbindung (27) zwischen der Ausgangsseite der Pumpe (28) und dem Zwischenspeicher (26), wobei das Hydraulikfluid mittels der Pumpe (28) von der zumindest einen Radbremse (24a, 24b) direkt in den Zwischenspeicher (26) förderbar ist, wodurch Bremsdruck in der zumindest einen Radbremse (24a, 24b) abbaubar ist, wobei Hydraulikfluid von dem Zwischenspeicher (26) in die wenigstens eine Radbremse (24a, 24b) förderbar ist, wodurch Bremsdruck in der wenigstens einen Radbremse (24a, 24b) aufbaubar ist, und wobei der Druckaufbau und der Druckabbau in der zumindest einen Radbremse (24a, 24b) durch Öffnen oder Schließen der zumindest einen dritten Ventilanordnung (38) unterscheidbar sind, so dass bei geöffneter dritter Ventilanordnung (38) Bremsdruck in der zumindest einen Radbremse (24a, 24b) abbaubar ist und bei geschlossener dritter Ventilanordnung (38) Bremsdruck in der zumindest einen Radbremse (24a, 24b) aufbaubar ist, wobei in dem Hydraulikaggregat (80) zumindest eine Pumpe (28) mit variabler Förderleistung, sowie zumindest eine erste Ventilanordnung (30, 32), zumindest eine zweite Ventilanordnung (34, 36) und zumindest eine dritte Ventilanordnung (38) aufgenommen sind,
**dadurch gekennzeichnet, dass**
ein Hydraulikfluid mittels der Pumpe (28) von zumindest einer Radbremse (24a, 24b) direkt in einen Zwischenspeicher (26) förderbar ist, wodurch Bremsdruck in der zumindest einen Radbremse (24a, 24b) abbaubar ist, und dass das Hydraulikfluid von dem Zwischenspeicher (26) in die wenigstens eine Radbremse (24a, 24b) förderbar ist, wodurch Bremsdruck in der wenigstens einen Radbremse (24a, 24b) aufbaubar ist, wobei der Druckaufbau und der Druckabbau in der zumindest einen Radbremse (24a, 24b) durch Öffnen oder Schließen der zumindest einen dritten Ventilanordnung (38) unterscheidbar sind, so dass bei geöffneter dritter Ventilanordnung (38) Bremsdruck in der zumindest einen Radbremse (24a, 24b) abbaubar ist und bei geschlossener dritter Ventilanordnung (38) Bremsdruck in der zumindest einen Radbremse (24a, 24b) aufbaubar ist.

9. Verfahren zum Steuern eines Bremssystems, wobei
- der Bremsdruck (62) in zumindest einer Radbremse (24a, 24b) durch Fördern von Hydraulikfluid mittels einer Pumpe (28) mit variabler Förderleistung von der zumindest einen Radbremse (24a, 24b) in einen Zwischenspeicher (26) reduziert wird, wobei
- sich zumindest eine zweite Ventilanordnung (34, 36) zum Sperren einer hydraulische Verbindung (22) zwischen der zumindest einen Radbremse (24a, 24b) und einer Eingangsseite der Pumpe (28) zum Fördern des Hydraulikfluids in Durchlassstellung befindet, und
- sich zumindest eine dritte Ventilanordnung (38) zum Sperren einer hydraulischen Verbindung (27) zwischen einer Ausgangsseite der Pumpe (28) und dem Zwischenspeicher (26) in Durchlassstellung befindet, und wobei
- der Bremsdruck (62) in der zumindest einen Radbremse (24a, 24b) durch Fördern des Hydraulikfluids mittels einer Pumpe (28) mit variabler Förderleistung von dem Zwischenspeicher (26) in die zumindest eine Radbremse (24a, 24b) erhöht wird, wobei
- sich die zumindest eine dritte Ventilanordnung (38) zum Sperren der hydraulischen Verbindung (27) zwischen der Ausgangsseite der Pumpe (28) und dem Zwischenspeicher (26) in Sperrstellung befindet.

10. Verfahren zum Steuern eines Bremssystem nach Anspruch 9, wobei der Bremsdruck in zumindest einer Radbremse reduziert wird, während in einer elektrischen Maschine (44) des Landfahrzeugs ein generatorisches Bremsmoment aufgebaut wird, um kinetische Energie des Landfahrzeugs in elektrische Energie umzuwandeln.

11. Verfahren zum Steuern eines Bremssystems nach Anspruch 9 oder 10, wobei sich beim Reduzieren des Bremsdrucks (62) in der zumindest einen Radbremse (24a, 24b) ein erstes Sperrventil (33) zum Sperren einer hydraulischen Verbindung (31) zwischen dem Zwischenspeicher (26) und der Eingangsseite der Pumpe (28) öffnet, wenn der Bremsdruck (62) in der zumindest einen Radbremse (24a, 24b) einen vorbestimmten Druck unterschreitet.

12. Verfahren nach einem der Ansprüche 9 bis 11, wobei sich ein zweites Sperrventil (35) zum Sperren eine hydraulischen Verbindung zwischen einem Hauptzylinder (16) und der zumindest einen Radbremse (24a, 24b) öffnet und die Drehzahl der Pumpe (28) reduziert wird, wenn der Bremsdruck im Hauptzylinder (16) einen vorbestimmten Druck übersteigt.

## Claims

1. Brake system (10) for a land vehicle, comprising:
- at least one wheel brake (24a, 24b) to be assigned to a wheel of the land vehicle;
- a pump (28) having a variable capacity, which is devised to deliver hydraulic fluid from its input side to its output side;
- at least one accumulator (26) for receiving hydraulic fluid;
- a hydraulic connection (31) between the accumulator (26) and the input side of the pump (28);
- at least one first valve arrangement (30, 32) for blocking a hydraulic connection (20) between the output side of the pump (28) and the at least one wheel brake (24a, 24b);
- at least one second valve arrangement (34, 36) for blocking a hydraulic connection (22a, 22b) between the at least one wheel brake (24a, 24b) and the input side of the pump (28);
- at least one third valve arrangement (38) for blocking a hydraulic connection (27) between the output side of the pump (28) and the accumulator (26), **characterized in that**
the hydraulic fluid may be delivered by means of the pump (28) from the at least one wheel brake (24a, 24b) directly into the accumulator (26), with the result that brake pressure in the at least one wheel brake (24a, 24b) may be reduced, and that the hydraulic fluid may be delivered from the accumulator (26) into the at least one wheel brake (24a, 24b), with the result that brake pressure in the at least one wheel brake (24a, 24b) may be built up,
wherein the pressure build-up and the pressure reduction in the at least one wheel brake (24a, 24b) may be distinguished by opening or closing the at least one third valve arrangement (38) so that, when the third valve arrangement (38) is open, brake pressure in the at least one wheel brake (24a, 24b) may be reduced and, when the third valve arrangement (38) is closed, brake pressure in the at least one wheel brake (24a, 24b) may be built up.

2. Brake system according to claim 1, wherein the brake system comprises a control unit (42), which is devised during a regenerative braking operation to select switching positions for the valve arrangements (30, 32, 34, 36, 38) and to activate the pump (28) in such a way that the pump (28) delivers hydraulic fluid from the at least one wheel brake (24a, 24b) to the accumulator (26), while in an electric machine (44) of the land vehicle a regenerative braking torque (68) is built up in order to convert kinetic energy of the land vehicle to electrical energy.

3. Brake system according to claim 2, wherein the control unit (42) is devised to select the volumetric capacity of the pump (28) and the switching positions of the valve arrangements (30, 32, 34, 36, 38) in such a way that at any time the sum of regenerative braking torque (68) and the braking torque of the at least one wheel brake remains constant or within a tolerance range that is to be selected.

4. Brake system according to one of claims 2 or 3, wherein the control unit (42) is further devised to vary the volumetric capacity of the pump (28) in order to compensate fluctuations of the regenerative braking torque (68), in particular to increase the volumetric capacity of the pump (28) in order to compensate a fall in the regenerative braking torque (68).

5. Brake system according to one of claims 2 to 4, wherein at least one fourth valve arrangement (39) is provided for blocking a hydraulic connection (20) between a master cylinder (16) and the at least one wheel brake (24a, 24b), and wherein the control unit (42) selects the switching position of the at least one fourth valve arrangement (39) in such a way
that an actuation of a brake pedal (12) of the land vehicle leads to a volume displacement from the master cylinder (16) to the at least one wheel brake (24a, 24b), and
that during the build-up of the regenerative braking torque (68) the at least one fourth valve arrangement (39) blocks the hydraulic connection (20) between the master cylinder (16) and the at least one wheel brake (24a, 24b).

6. Brake system according to one of claims 2 to 5, wherein the control unit (42) selects the switching position of the valve arrangements (30, 32, 34, 36, 38) in such a way that the delivery of the pump (28) leads in one switching position of the valve arrangements (30, 32, 34, 36, 38) to a reduction of the brake pressure in the at least one wheel brake (24a, 24b) and in a further switching position of the valve arrangements (30, 32, 34, 36, 38) to an increase of the brake pressure in the at least one wheel brake (24a, 24b).

7. Brake system according to one of the preceding claims, wherein a first shut-off valve (33), preferably a non-return valve, is provided
- for blocking a hydraulic connection between the accumulator (26) and the at least one second valve arrangement (34, 36) at least in the direction from the at least one second valve arrangement (34, 36) to the accumulator (26) and/or
- for blocking the hydraulic connection (31) between the accumulator (26) and the input side of the pump (28) at least in the direction from the input side of the pump (28) to the accumulator (26).

8. Hydraulic unit (80) for a brake system comprising at least one wheel brake (24a, 24b) to be assigned to a wheel of a land vehicle, a pump (28) having a variable capacity, which is devised to deliver hydraulic fluid from its input side to its output side, at least one accumulator (26) for receiving hydraulic fluid, a hydraulic connection (31) between the accumulator (26) and the input side of the pump (28), at least one first valve arrangement (30, 32) for blocking a hydraulic connection (20) between the output side of the pump (28) and the at least one wheel brake (24a, 24b), at least one second valve arrangement (34, 36) for blocking a hydraulic connection (22a, 22b) between the at least one wheel brake (24a, 24b) and the input side of the pump (28), and at least one third valve arrangement (38) for blocking a hydraulic connection (27) between the output side of the pump (28) and the accumulator (26), wherein the hydraulic fluid may be delivered by means of the pump (28) from the at least one wheel brake (24a, 24b) directly into the accumulator (26), with the result that brake pressure in the at least one wheel brake (24a, 24b) may be reduced, wherein hydraulic fluid may be delivered from the accumulator (26) into the at least one wheel brake (24a, 24b), with the result that brake pressure in the at least one wheel brake (24a, 24b) may be built up, and wherein the pressure build-up and the pressure reduction in the at least one wheel brake (24a, 24b) may be distinguished by opening or closing the at least one third valve arrangement (38) so that, when the third valve arrangement (38) is open, brake pressure in the at least one wheel brake (24a, 24b) may be reduced and, when the third valve arrangement (38) is closed, brake pressure in the at least one wheel brake (24a, 24b) may be built up, wherein in the hydraulic unit (80) at least one pump (28) having a variable capacity, as well as at least one first valve arrangement (30, 32), at least one second valve arrangement (34, 36) and at least one third valve arrangement (38) are accommodated, **characterized in that**
a hydraulic fluid may be delivered by means of the pump (28) from at least one wheel brake (24a, 24b) directly into an accumulator (26), with the result that brake pressure in the at least one wheel brake (24a, 24b) may be reduced, and that the hydraulic fluid may be delivered from the accumulator (26) into the at least one wheel brake (24a, 24b), with the result that brake pressure in the at least one wheel brake (24a, 24b) may be built up, wherein the pressure build-up and the pressure reduction in the at least one wheel brake (24a, 24b) may be distinguished by opening or closing the at least one third valve arrangement (38) so that, when the third valve arrangement (38) is open, brake pressure in the at least one wheel brake (24a, 24b) may be reduced and, when the third valve arrangement (38) is closed, brake pressure in the at least one wheel brake (24a, 24b) may be built up.

9. Method for controlling a brake system, wherein
- the brake pressure (62) in at least one wheel brake (24a, 24b) is reduced by delivering hydraulic fluid by means of a variable capacity pump (28) from the at least one wheel brake (24a, 24b) into an accumulator (26), wherein
- at least one second valve arrangement (34, 36) for blocking a hydraulic connection (22) between the at least one wheel brake (24a, 24b) and an input side of the pump (28) for delivering the hydraulic fluid is situated in let-through position, and
- at least one third valve arrangement (38) for blocking a hydraulic connection (27) between an output side of the pump (28) and the accumulator (26) is situated in let-through position, and wherein
- the brake pressure (62) in the at least one wheel brake (24a, 24b) is increased by delivering the hydraulic fluid by means of a variable capacity pump (28) from the accumulator (26) into the at least one wheel brake (24a, 24b), wherein
- the at least one third valve arrangement (38) for blocking the hydraulic connection (27) between the output side of the pump (28) and the accumulator (26) is situated in blocking position.

10. Method for controlling a brake system according to claim 9, wherein the brake pressure in at least one wheel brake is reduced, while in an electric machine (44) of the land vehicle a regenerative braking torque is built up in order to convert kinetic energy of the land vehicle to electrical energy.

11. Method for controlling a brake system according to claim 9 or 10, wherein during the reduction of the brake pressure (62) in the at least one wheel brake (24a, 24b) a first shut-off valve (33) for blocking a hydraulic connection (31) between the accumulator (26) and the input side of the pump (28) opens when the brake pressure (62) in the at least one wheel brake (24a, 24b) falls below a predetermined pressure.

12. Method according to one of claims 9 to 11, wherein a second shut-off valve (35) for blocking a hydraulic connection between a master cylinder (16) and the at least one wheel brake (24a, 24b) opens and the rotational speed of the pump (28) is reduced when the brake pressure in the master cylinder (16) exceeds a predetermined pressure.

## Revendications

1. Système de freinage (10) destiné à un véhicule terrestre, comprenant :
- au moins un frein de roue (24a, 24b) à associer à une roue du véhicule terrestre ;
- une pompe (28) à débit variable, conçue pour transporter un fluide hydraulique depuis son côté entrée jusqu'à son côté sortie ;
- au moins un réservoir intermédiaire (26) servant à recevoir un fluide hydraulique ;
- une liaison hydraulique (31) entre le réservoir intermédiaire (26) et le côté entrée de la pompe (28) ;
- au moins un premier agencement de soupapes (30, 32) servant à bloquer une liaison hydraulique (20) entre le côté sortie de la pompe (28) et ledit au moins un frein de roue (24a, 24b) ;
- au moins un deuxième agencement de soupapes (34, 36) servant à bloquer un fluide hydraulique (22a, 22b) entre ledit au moins un frein de roue (24a, 24b) et le côté entrée de la pompe (28) ;
- au moins un troisième agencement de soupape (38) servant à bloquer une liaison hydraulique (27) entre le côté sortie de la pompe (28) et le réservoir intermédiaire (26),
**caractérisé en ce que**
le fluide hydraulique peut être directement transporté au moyen de la pompe (28) depuis ledit au moins un frein de roue (24a, 24b) jusque dans le réservoir intermédiaire (26), ce qui permet la diminution de la pression de freinage dans ledit au moins un frein de roue (24a, 24b), et **en ce que** le fluide hydraulique peut être transporté depuis le réservoir intermédiaire (26) jusque dans ledit au moins un frein de roue (24a, 24b), ce qui permet l'augmentation de la pression de freinage dans ledit au moins un frein de roue (24a, 24b),
la diminution et l'augmentation de la pression dans ledit au moins un frein de roue (24a, 24b) pouvant être distinguées au moyen de l'ouverture ou de la fermeture dudit au moins un troisième agencement de soupape (38) si bien que la pression de freinage peut diminuer dans ledit au moins un frein de roue (24a, 24b) lorsque le troisième agencement de soupape (38) est ouvert, et augmenter dans ledit au moins un frein de roue (24a, 24b) lorsque le troisième agencement de soupape (38) est fermé.

2. Système de freinage selon la revendication 1, ce système de freinage comportant une unité de commande (42) conçue pour commander la pompe (28) et prescrire de telle sorte des positions de commutation aux agencements de soupapes (30 32, 34, 36, 38) pendant une opération de freinage à récupération d'énergie
que la pompe (28) transporte un fluide hydraulique depuis ledit au moins un frein de roue (24a, 24b) vers le réservoir intermédiaire (26) tandis qu'il se forme un couple de freinage (68) à récupération d'énergie à l'intérieur d'un moteur (44) électrique du véhicule terrestre afin de convertir l'énergie cinétique du véhicule terrestre en énergie électrique.

3. Système de freinage selon la revendication 2, l'unité de commande (42) étant conçue pour déterminer le débit de la pompe (28) et les positions de commutation des agencements de soupapes (30, 32, 34, 36, 38) de telle sorte que la somme du couple de freinage (68) à récupération d'énergie et du couple de freinage dudit au moins un frein de roue reste toujours la même ou reste toujours dans les limites d'une plage de tolérances à déterminer.

4. Système de freinage selon l'une des revendications 2 ou 3, l'unité de commande étant en outre conçue pour modifier le débit de la pompe (28) afin de compenser des variations du couple de freinage (68) à récupération d'énergie, plus particulièrement pour augmenter le débit de la pompe (28) afin de compenser une diminution du couple de freinage (68) à récupération d'énergie.

5. Système de freinage selon l'une des revendications 2 à 4, au moins un quatrième agencement de soupape (39) servant à bloquer une liaison hydraulique entre un maître-cylindre (16) et ledit au moins un frein de roue (24a, 24b) étant prévu, et l'unité de commande (42) prédéterminant la position de commutation dudit au moins un quatrième agencement de soupape (39) de telle façon
qu'une activation de la pédale de frein (12) du véhicule terrestre provoque un déplacement volumique depuis le maître-cylindre (16) vers ledit au moins un frein de roue (24a, 24b), et
que ledit au moins un quatrième agencement de soupape (39) bloque la liaison (20) hydraulique entre le maître-cylindre (16) et ledit au moins un frein de roue (24a, 24b) pendant la formation du couple de freinage (68) à récupération d'énergie.

6. Système de freinage selon l'une des revendications 2 à 5, l'unité de commande (42) prédéterminant de telle façon la position de commutation des agencement de soupapes (30, 32, 34, 36, 38) que le fonctionnement de la pompe (28) entraîne, dans une position de commutation des agencements de soupapes (30, 32, 34, 36, 38), une diminution de la pression de freinage dans ledit au moins un frein de roue (24a, 24b), et, dans une autre position de commutation des agencements de soupape (30,32, 34, 36, 38), une augmentation de la pression de freinage dans ledit au moins un frein de roue (24a, 24b).

7. Système de freinage selon l'une des revendications précédentes, un premier clapet de blocage (33), préférentiellement un clapet antiretour, étant prévu,
- pour bloquer, au moins dans la direction allant dudit au moins un deuxième agencement de soupapes (34, 34) vers le réservoir intermédiaire (26), une liaison hydraulique entre le réservoir intermédiaire (26) et ledit au moins un deuxième agencement de soupapes (34, 36), et/ou
- pour bloquer, au moins dans la direction allant du côté entrée de la pompe (28) vers le réservoir intermédiaire (26), la liaison hydraulique entre le réservoir intermédiaire (26) et le côté entrée de la pompe (28).

8. Unité hydraulique (80) pour un système de freinage, comportant au moins un frein de roue (24a, 24b) à associer à une roue du véhicule terrestre, une pompe (28) à débit variable conçue pour transporter un fluide hydraulique depuis son côté entrée jusqu'à son côté sortie, au moins un réservoir intermédiaire (26) servant à recevoir un fluide hydraulique, une liaison hydraulique (31) entre le réservoir intermédiaire (26) et le côté entrée de la pompe (28), au moins un premier agencement de soupapes (30, 32) servant à bloquer une liaison hydraulique (20) entre le côté sortie de la pompe (28) et ledit au moins un frein de roue (24a, 24b), au moins un deuxième agencement de soupapes (34, 36) servant à bloquer un fluide hydraulique (22a, 22b) entre ledit au moins un frein de roue (24a, 24b) et le côté entrée de la pompe (28), et au moins un troisième agencement de soupape (38) servant à bloquer une liaison hydraulique (27) entre le côté sortie de la pompe (28) et le réservoir intermédiaire (26), le fluide hydraulique pouvant être directement transporté au moyen de la pompe (28) depuis ledit au moins un frein de roue (24a, 24b) jusque dans le réservoir intermédiaire (26), ce qui permet la diminution de la pression de freinage dans ledit au moins un frein de roue (24a, 24b), le fluide hydraulique pouvant être transporté depuis le réservoir intermédiaire (26) jusque dans ledit au moins un frein de roue (24a, 24b), ce qui permet l'augmentation de la pression de freinage dans ledit au moins un frein de roue (24a, 24b), et la diminution et l'augmentation de la pression dans ledit au moins un frein de roue (24a, 24b) pouvant être distinguées au moyen de l'ouverture ou de la fermeture dudit au moins un troisième agencement de soupape (38) si bien que la pression de freinage peut diminuer dans ledit au moins un frein de roue (24a, 24b) lorsque le troisième agencement de soupape (38) est ouvert, et augmenter dans ledit au moins un frein de roue (24a, 24b) lorsque le troisième agencement de soupape (38) est fermé, au moins une pompe (28) à débit variable, au moins un premier agencement de soupapes (30, 32), au moins un deuxième agencement de soupapes (34, 36) et au moins un troisième agencement de soupape (38) étant logés dans l'unité hydraulique (80),
**caractérisée en ce que**
un fluide hydraulique peut être directement transporté au moyen de la pompe (28) depuis ledit au moins un frein de roue (24a, 24b) jusque dans le réservoir intermédiaire (26), ce qui permet la diminution de la pression de freinage dans ledit au moins un frein de roue (24a, 24b), et **en ce que** le fluide hydraulique peut être transporté depuis le réservoir intermédiaire (26) jusque dans ledit au moins un frein de roue (24a, 24b), ce qui permet l'augmentation de la pression de freinage dans ledit au moins un frein de roue (24a, 24b),
la diminution et l'augmentation de la pression dans ledit au moins un frein de roue (24a, 24b) pouvant être distinguées au moyen de l'ouverture ou de la fermeture dudit au moins un troisième agencement de soupape (38) si bien que la pression de freinage peut diminuer dans ledit au moins un frein de roue (24a, 24b) lorsque le troisième agencement de soupape (38) est ouvert, et augmenter dans ledit au moins un frein de roue (24a, 24b) lorsque le troisième agencement de soupape (38) est fermé.

9. Procédé de commande d'un système de freinage,
- la pression de freinage (62) dans ledit au moins un frein de roue (24a, 24b) étant réduite par le transport au moyen d'une pompe (28) d'un fluide hydraulique à débit variable depuis ledit au moins un frein de roue (24a, 24b) jusque dans un réservoir intermédiaire (26),
- au moins un deuxième agencement de soupapes (34, 36) servant à bloquer une liaison hydraulique (22) entre ledit au moins un frein de roue (24a, 24b) et le côté entrée de la pompe (28) se trouvant en position de passage pour transporter le fluide hydraulique, et
- au moins un troisième agencement de soupape (38) servant à bloquer une liaison hydraulique (27) entre le côté sortie de la pompe (28) et le réservoir intermédiaire (26) se trouvant en position de passage, et
- la pression de freinage (62) dans ledit au moins un frein de roue (24a, 24b) étant augmentée par le transport d'un fluide hydraulique au moyen d'une pompe (28) à débit variable depuis le réservoir intermédiaire (26) jusque dans ledit au moins un frein de roue (24a, 24b),
- au moins le troisième agencement de soupape (38) servant à bloquer la liaison hydraulique (27) entre le côté sortie de la pompe (28) et le réservoir intermédiaire (26) se trouvant en position de blocage.

10. Procédé de commande d'un système de freinage selon la revendication 9, la pression de freinage étant diminuée dans ledit au moins un frein de roue tandis qu'il se forme un couple de freinage (68) à récupération d'énergie à l'intérieur d'un moteur (44) électrique du véhicule terrestre afin de convertir l'énergie cinétique du véhicule terrestre en énergie électrique.

11. Procédé de commande d'un système de freinage selon la revendication 9 ou 10, dans le cadre duquel, lors de la diminution de la pression de freinage (62) dans ledit au moins un frein de roue (24a, 24b), un premier clapet de blocage (33) servant à bloquer une liaison hydraulique (31) entre le réservoir intermédiaire (26) et le côté entrée de la pompe (28) s'ouvre lorsque la pression de freinage (62) dans ledit au moins un frein de roue (24a, 24b) est inférieure à une pression prédéterminée.

12. Procédé selon l'une des revendications 9 à 11, dans le cadre duquel un deuxième clapet de blocage (35) servant à bloquer une liaison hydraulique entre un maître-cylindre (16) et ledit au moins un frein de roue (24a, 24b) s'ouvre et la pompe (28) réduit son régime lorsque la pression de freinage dans le maître-cylindre (16) dépasse une pression prédéterminée.
